# EUROPEAN PATENT APPLICATION

(11) **EP 1 426 002 A1**
(43) Date of publication of application: **09.06.2004**
(21) Application number: 02425753.7
(22) Date of filing: 06.12.2002
(51) Int. Cl.: A47J 36/36, A47J 39/02

(54) **Device and method for the slow cooking of foods and furniture element incorporating the device**

(71) Applicant: Magni, Riccardo Cesare, 61010 Fiorenzuola Di Focara (PU) (IT); Magni, Patrizia, 61100 Pesaro (IT)
(72) Inventor: Magni, Riccardo Cesare, 61010 Fiorenzuola Di Focara (PU) (IT)
(74) Representative: Lanzoni, Luciano

(57) **Abstract**

A device (1) for the slow cooking of foods comprises in combination: a vessel (2) usable for the cooking of edible substances which in turn call for or require the use of at least a cooking liquid, a thermally insulating container (3), into which the vessel (2) is inserted, which allows access to the vessel (2) and which insulates the vessel (2) from the exterior maintaining proximate to the boiling point the temperature of the cooking liquid, contained in the vessel (2), for a predetermined time at least sufficient to cook the edible substances with no need to provide the cooking liquid with more energy than that required to bring it to a boil a first time. A furniture element (19) comprises, incorporated within its own interior, at least a device (1) for the slow cooking of foods. In a method for the slow cooking of food substances, which call for or require the use of at least a cooking liquid, once the cooking liquid is brought to a boil, the boiling of the liquid is interrupted, suspending the provision of energy to the cooking liquid, and the food substances are thermally insulated from the exterior, maintaining the cooking liquid at a temperature proximate to the boiling point, but not sufficient to allow the boiling itself, for a predetermined cooking time without providing additional energy to the cooking liquid.

## Description

The present invention relates to a device and a method for the slow cooking of foods, in particular for cooking edible substances that call for or require the use of at least a cooking liquid. The invention further relates to a furniture element that incorporates the device.

Edible substances that call for or require the use of at least a cooking liquid (such as boiled vegetables, stews, boiled meats, broth, fish soups, gravies, sauces, etc.) are normally cooked in pots or casseroles (which can be made of metal, glass, earthenware, ceramics, etc.) positioned either over a direct source of heat (such as a heating plate or a flame) or also inside a microwave oven (provided the material of the container used for cooking is compatible with microwaves).

The cooking liquid is brought to a boil (more or less turbulent) and energy continues to be provided through the direct or indirect source of heat to maintain it in this condition until the foods are completely cooked.

However, in this way, hard though one may try to control the boiling of the cooking liquid, it can easily occur that the boiling is too violent, with the consequent deterioration of the characteristics of the foods to be cooked. Or, there is the risk that, through rapid evaporation, the quantity of cooking liquid is severely reduced, causing the bottom of the pot to be fouled with residues from the edible substances and, potentially, the partial or total carbonisation of the edible substances themselves.

To try to avoid this latter problem, use is made of adhesion proof coatings of the walls of the pot or casserole, or containers with shaped bottoms and of such thickness as to minimise the risk of an excessively direct contact between the food and the heat source. While these remedies do reduce the risk, they force to cook constantly to check the cooking operation until its completion.

Even if one successfully avoids the problem of fouling or carbonisation, thanks to the use of an abundant quantity of cooking fluid and of an adequate control over the power provided to the cooking fluid by the heat source, it is nonetheless still necessary for the cook frequently to check the cooking operation to prevent the foods from being overcooked, with the consequent alteration of their characteristics.

Even when pressure cookers or microwave ovens are used, which make the cooking operation far more rapid and, in the case of the pressure cooker, somewhat less violent, it is still not possible to eliminate the aforementioned drawbacks and reduce the aforesaid risks.

Moreover, throughout the cooking operation it is necessary to continue to provide energy even after the cooking liquid is brought to a boil.

An aim of the present invention is to overcome the aforesaid drawbacks, making available a device and a method for the slow cooking of foods that enables to achieve a high degree of energy savings while minimising an operator's work time and the risk of deterioration of the foods.

Another aim of the present invention is to make available a furniture element incorporating the device for the slow cooking of foods, which can be used for instance in a kitchen.

These aims and others besides, which will become more readily apparent in the course of the description that follows, are achieved, in accordance with the present invention, respectively by a device for the slow cooking of foods, a method for the slow cooking of foods and furniture element, in accordance with the accompanying independent claims, additional embodiments thereof being identified in the accompanying and corresponding dependent claims.

The invention is described in greater detail hereafter with the aid of the drawings, which illustrate an embodiment provided purely by way of non limiting example.
- Figures 1 and 2 are partially exploded schematic perspective views of two embodiments of the device according to the invention.
- Figure 3 is a schematic perspective view of a third embodiment of the device according to the invention.
- Figure 4 shows a schematic perspective view of a furniture element incorporating the device according to the invention inserted in a part of a kitchen.
- Figures 5 and 6 show details of additional embodiments of the device according to the invention.

With reference to the figures, a device 1 for the slow cooking of foods comprises, in combination, a vessel 2 usable for cooking edible substances, which in turn call for or require the use of at least a cooking liquid, and a thermally insulating container 3, in which the vessel 2 is inserted. The container 3 allows access to the vessel 2 and insulates the vessel 2 from the exterior, maintaining the temperature of the cooking liquid, contained in the vessel 2, close to boiling point for a predetermined time at least sufficient for cooking the edible substances without the need to provide the cooking liquid with more energy than that required to bring it to a boil the first time.

The cooking operation is then accomplished using the quantity of heat that the cooking liquid has when it is brought to the boiling point and, fundamentally, the principle of operation of the device 1 resides in preventing, by means of the thermal insulation offered by the container 3, said quantity of heat from being dispersed, letting the cooking continue with no need to provide additional energy.

Since the cooking liquid remains in a boil for a relatively short time, the cook's fixed presence or constant monitoring is not strictly necessary either.

The required thermal insulation can be obtained by adequately structuring the container 3. In particular, the container 3 can be and is constructed with thermally insulating materials, appropriately assembled together. Preferably, the thermally insulating materials comprise polystyrene.

In a preferred embodiment, the container 3 is mainly made of polystyrene, for instance by moulding (or by assembly). This solution is particularly economical and easy to construct.

In an alternative embodiment, not shown in the figures (and more expensive) the container 3 is provided with a gap in which a vacuum has been obtained.

As shown in the figures, the container 3 comprises a thermally insulating lid 4 for access to the container 3.

It, too, can be made with appropriate thermally insulating materials, which may include or be entirely composed of polystyrene.

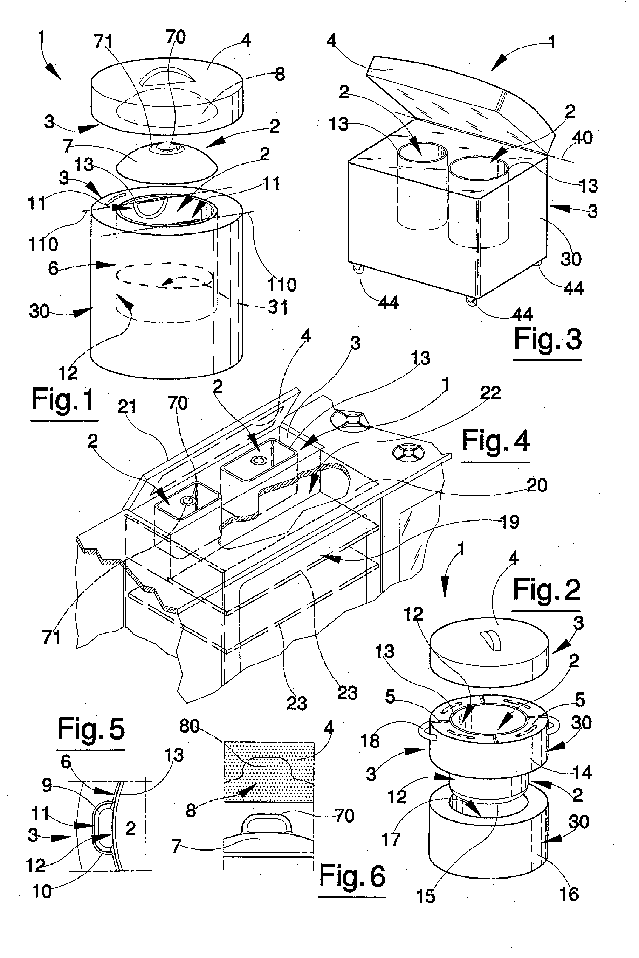

The lid 4 of the container 3 can be removable, as shown in Figures 1 and 2. In this case, opportunely the container 3 comprises reference elements 5 co-operating with corresponding reference elements on the lid 4 of the container 3 for the positioning of the lid on the container 3. Said reference elements can comprise grooves or recesses and corresponding protuberances, or similar objects.

Alternatively, as shown in Figures 3 and 4, the cover 4 of the container 3 can be hinged to a body 30 of the container 3. It can, for instance, rotate about a horizontal axis 40.

In any case, advantageously, the container 3 can comprise elements for locking its own lid 4. The closure of the container 3 by means of its lid 4 can be such as to guarantee at least partially a seal against the escape of vapours.

The container 3 can have circular or oval base. It can also have substantially rectangular base, in which case (especially if incorporated in a furniture element, as we shall see subsequently) it can allow for a better adaptation of the device 1 to the availability of space.

In a preferred embodiment of the invention, the vessel 2 is removable from the container 3. In this case the vessel 2 can be placed directly on the heating plates or in the microwave oven to bring the cooking liquid to the boiling point and it can also be in the form of a normal pot, of a normal casserole or of a normal heat-resistant pan. The vessel 2 can, moreover, have substantially circular or oval base. It can also have (for the same reasons illustrated for the container 3) substantially rectangular base.

The container 3 has at least an inner cavity accessible from the exterior into which the vessel 2 can be freely inserted.

Conveniently, said inner cavity conforms to the vessel 2, so that the vessel 2 can be freely inserted into it in contact with inner walls 6 of the container 3.

In the particularly simple case of vessel 2 that for the most part has substantially cylindrical shape, internally to the container the cavity will also be cylindrical and with height substantially coinciding with that of the vessel 2.

In general (independently also from the shape of the inner cavity) the container 3 can comprise inserts 31 that are removable and can be placed inside the cavity itself to adjust the internal dimensions and/or the shape thereof in relation to the dimensions and/or to the shape of a different vessel 2 able to inserted into the container 3.

The cavity can be partially obtained in the body 30 of the container 3 and partially in the lid 4 of the container 3, or totally obtained in the body 30 of the container 3. In this case the lid 4 could comprise a protuberance (not shown in the figures), always structured in such a way as to be thermally insulating and able to be inserted in the body 30 to close the cavity and possibly also to achieve a seal on the lateral walls thereof.

If the vessel 2 is provided with its own lid 7, then, as shown in Figure 1 and in Figure 6, in the container 3 may also be obtained a corresponding seat 8 for housing the lid 7 of the vessel 2, which seat 8 can also comprise a contour 80 for housing a possible handle 70 of the lid 7 of the vessel 2. Moreover, as shown in particular in Figure 1, the lid 7 of the vessel 2 can be provided with a recess 71 in which its own lid 70 is housed.

If the vessel 2 comprises handles 9 rigidly connected thereto and projected outwards, in the container 3 will be obtained as many corresponding additional seats 10 (see, in particular, Figure 5).

Alternatively, the vessel 2 comprises at least a grip 11 positioned inside the volume limited by outer walls of the vessel 2. Said outer walls are understood to comprise lateral walls as well as bottom walls and upper covering walls (the lid 7, if any is present, of the vessel 2). Said grip 11 can for example be constructed by means of one or more simple recesses obtained in lateral walls of the vessel 2 (not shown in the figures). Alternatively, the grip 11 can be removable.

Preferably, the grip 11 can be extracted from said volume. In particular, as shown in Figure 1, the grip 11 is hinged in proximity to an upper edge 13 of the vessel 2, being able, in particular, but not exclusively to rotate about a corresponding horizontal axis 110. Figure 1 shows an embodiment with two grips 11 in the form of handles.

In an alternative embodiment of the invention, shown in Figure 2, the vessel 2 is not completely removable from the container 3. In particular, the container 3 comprises a central body 14, integral with the vessel 2, which covers lateral walls 12 of the vessel 2 from an upper edge 13 thereof to a predetermined height from a bottom 15 of the vessel 2 itself. The container 3 also comprises a base 16, provided with a seat 17 for the bottom 15 of the vessel 2, which inferiorly completes the container 3.

The container 3 without its base 16 can be used directly to bring the cooking liquid to a boil on a heat source, exactly like a pot. The central body 14 can be provided with its own external handles 18 for an easy handling of the system.

In general, both in the case when it is removable and in the case when it is not, the vessel 2 is generally made of a heat conducting material, in particular of a metallic material, such as stainless steel or the like.

Alternatively, the vessel 2 can also be made of glass, earthenware, ceramics. If it is not metallic, it is preferable for the vessel 2 to be made of a microwave-compatible material (i.e. one that can be inserted in a microwave oven without any risks).

A single device 1 for the slow cooking of foods can also comprise two or more vessels 2.

In general during use it is possible to bring the cooking liquid to a boil using the vessel 2 directly on the heat source. Once the cooking liquid is brought to a boil, the vessel 2 is inserted into the container 3 (if removable) or inserted with is own bottom 15 in the related seat 17 of the base 16 of the container 3. The container 3 is closed with its lid 4 (which may be locked to improve the seal and insulation) and allowed to rest with its content, while cooking proceeds with the temperature of the cooking liquid maintained slightly below its boiling time (for a time that can even be very long).

The device 1 for the slow cooking of foods can become a useful and convenient furnishing element. Figure 3, for instance, shows an embodiment in which the device 1 can be used as a seat, possibly provided with wheels 41. The lid 4 of the container 3 in the illustrated example is hinged to the body 30 of the container 3 and is able to rotate about a horizontal axis 40, embodying a seat (whereto can be incorporated a pillow with stuffing).

One or more devices 1 for the slow cooking of foods can be incorporated in a furniture element 19. For example, the furniture element 19 can be a stand-alone food trolley or, as shown in Figure 4, an element of a modular kitchen.

Conveniently, the device 1 for the slow cooking of foods is placed in an upper part of the furniture element 19, which, in turn, can comprise an upper plane 20 provided with a movable portion 21 for access to the device 1. The movable portion 21 can be able to rotate and hinged posteriorly to the furniture element 19.

Conveniently, the movable portion 21 can incorporate a lid 4 (shown in dashed lines in Figure 4) for the container 3 of the device 1.

In the presence of more than one device 1 inside the furniture element 19, there can be a single movable portion 21 (which may incorporate as many lids 4 as there are devices 1), or as many movable portions 21 as there are devices 1 (and each movable portion may incorporate a corresponding lid 4 of the corresponding device 1).

The device 1 for the slow cooking of foods can, as shown in Figure 4, can have rectangular prismatic shape, and only partially occupy the space of a compartment 22 limited superiorly by the upper plane 20 and inferiorly by a support plane 23 of the furniture element 19. In particular, it can leave the compartment 22 free for a certain depth to allow the store objects therein.

The invention also relates to a method for the slow cooking of edible substances that call for or require the use of at least a cooking liquid. The method comprises of step of bring the cooking liquid to a boil (for instance already inside the vessel 2 of the device 1 for the slow cooking of foods). Once the boiling condition is reached, it is interrupted, stopping the supply of energy to the cooking liquid, after a predetermined boiling time, not sufficient to cook the edible substances. Upon the expiration of the boiling time, the edible substances are thermally insulated from the exterior, maintaining the cooking liquid at a temperature proximate to the boiling point, but not sufficient to allow the boiling itself, for a predetermined cooking time without supplying any additional energy to the cooking liquid (for instance by inserting the vessel 2 in the container 3 and insulating it from the exterior).

Conveniently, the boiling of the cooking liquid is interrupted immediately, as soon as it occurs. If necessary (for instance when cooking foods that require differentiated initial boiling steps), the boiling can also be maintained for a short time.

In general (for instance when boiling potatoes), the cooking time is at least double than that required to cook the edible substances while continuously maintaining the cooking liquid in a boiling condition.

The invention achieves important advantages.

First of all, the cooking operation continues with no need for a heat source that continues to supply energy to the cooking liquid throughout the cooking process. An advantage, therefore, is its cost-efficiency, because cooking is completed with only the quantity of energy needed to bring the cooking liquid to the boiling point.

The lack of turbulence and the temperature just below the boiling temperature assure a slower cooking, more respectful of the contents and of the nutrition values of the foods. The nearly total absence of all heat dispersion enhances the aromas and flavours of the foods.

The risk of forming fouling food deposits, even containing carbon, on the bottom of the vessel, is minimised. Given, moreover, that the time required to bring the cooking liquid to a boil a first time is relatively short, it is not necessary for the vessel, in which the liquid is brought to a boil, to be particularly valuable or provided with particular contrivances to prevent the formation of said fouling deposits.

Moreover, the continuous presence of the cook is not required. It is therefore possible to cook overnight or while one is at work or busy with other tasks, and to find the food ready.

There is no risk of overcooking the foods, which is typical of traditional cooking methods with the cooking liquid in a turbulent boiling condition. Foods can stay in the pot even several hours longer than the minimum time required for their cooking and they will still be equally tasty and cooked to the right extent. The device according to the invention, therefore, can also be used as a location where foods can be kept hot and ready to be used once they are cooked.

The invention, therefore, is particularly useful for bars, restaurants and hotels, where there is a continual and sizeable consumption of cooked foods, or for homemakers who also work outside the house.

The device for cooking foods according to the invention can also be easily and economically incorporated in food trolleys, kitchens, furniture elements.

The invention thus conceived can be subject to numerous modifications and variations, without thereby departing from the scope of the inventive concept that characterises it. In practice all materials employed, as well as the dimensions, may be any, depending on requirements.

## Claims

1. Device (1) for the slow cooking of foods, **characterised in that** it comprises in combination:
- a vessel (2) usable for cooking edible substances that in turn call for or require the use of at least a cooking liquid;
- a container (3) thermally insulating, into which the vessel (2) is inserted, which allows access to the vessel (2) and which insulates the vessel (2) from the exterior, maintaining the temperature of the cooking liquid, contained in the vessel (2), near the boiling point, for a predetermined time at least sufficient for the cooking of the edible substances without the need to provide the cooking liquid with any more energy than that required to bring it to a boil a first time.

2. Device (1) as claimed in claim 1, **characterised in that** the container (3) comprises a heat insulating lid (4) for access to the vessel (3).

3. Device (1) as claimed in claim 2, **characterised in that** the lid (4) of the container (3) is hinged to a body (30) of the container (3).

4. Device (1) as claimed in claim 2 or 3, **characterised in that** the container (3) comprises reference elements (5) co-operating with corresponding reference elements on the lid (4) of the container (3) for the positioning of the lid on the container (3).

5. Device (1) as claimed in any of the claims from 2 to 4, **characterised in that** the container (3) comprises elements for locking its own lid (4) in the closed position.

6. Device (1) as claimed in any of the previous claims, **characterised in that** the container (3) has substantially rectangular base.

7. Device (1) as claimed in any of the previous claims, **characterised in that** the container (3) is made with thermally insulating materials.

8. Device (1) as claimed in claim 7, **characterised in that** the thermally insulating materials comprise polystyrene.

9. Device (1) as claimed in any of the claims from 1 a 6, **characterised in that** the container (3) is provided with a gap in which a vacuum is achieved.

10. Device (1) as claimed in any of the previous claims, **characterised in that** the vessel (2) is removable from the container(3).

11. Device (1) as claimed in claim 10, **characterised in that** the container (3) has at least an inner cavity accessible from the exterior, conforming to the vessel (2) and into which the vessel (2) can be freely inserted in contact with inner walls (6) of the container (3).

12. Device (1) as claimed in claim 11, **characterised in that** the container (3) comprises inserts (31) that can be removed and positioned inside the cavity itself to adjust the internal dimensions and/or the shape thereof according to the dimensions and/or to the shape of a different vessel (2) which can be inserted into the container (3).

13. Device (1) as claimed in claim 11 or 12, **characterised in that** the vessel (2) comprises at least a grip (11) situated inside the volume limited by outer walls of the vessel (2).

14. Device (1) as claimed in claim 13, **characterised in that** the grip (11) is able to be extracted from said volume.

15. Device (1) as claimed in claim 14, **characterised in that** the grip (11) is hinged in proximity to an upper edge (13) of the vessel (2).

16. Device (1) as claimed in any of the claims from 1 to 9, **characterised in that** the container (3) comprises:
- a central body (14) integral with the vessel (2), the central body (14) coating lateral walls (12) of the vessel (2) from an upper edge (13) thereof to a predetermined height from a bottom (15) of the vessel (2) itself;
- a base (16), provided with a seat (17) for the bottom (15) of the vessel (2), which completes the container (3) inferiorly.

17. Device (1) as claimed in any of the previous claims, **characterised in that** the vessel (2) s made of a heat conducting material.

18. Device (1) as claimed in claim 17, **characterised in that** the vessel (2) is made of a metallic material.

19. Device (1) as claimed in any of the claims from 1 a 17, **characterised in that** the vessel (2) is made of a microwave-compatible material.

20. Device (1) as claimed in any of the previous claims, **characterised in that** it comprises at least two vessels (2).

21. Furniture element (19), **characterised in that** it comprises, incorporated within its own interior, at least a device (1) for the slow cooking of foods as claimed in any of the claims from 1 to 20.

22. Furniture element (19) as claimed in claim 21, **characterised in that** the device (1) for the slow cooking of foods is positioned in an upper part of the furniture element (19).

23. Furniture element (19) as claimed in claim 22, **characterised in that** it comprises an upper plane (20) provided with a movable portion (21) for access to the device (1).

24. Furniture element (19) as claimed in claim 23, **characterised in that** the movable portion (21) incorporates a lid (4) for the container (3) of the device (1).

25. Method for the slow cooking of food substances that call for or require the use of at least a cooking liquid, the method comprising a step of bring the cooking liquid to a boil, the method being further **characterised in that** the boiling of the cooking liquid is interrupted, suspending the provision of energy to the cooking liquid, after a predetermined boiling time, not sufficient to cook the edible substances, and being **characterised in that** it further comprises, at the expiration of the boiling time, a step of thermally insulating the edible substances from the exterior maintaining the cooking liquid at a temperature proximate to the boiling point, but not sufficient to allow the boiling itself, for a predetermined cooking time without providing additional energy to the cooking liquid.

26. Method as claimed in claim 25, **characterised in that** the boiling of the cooking liquid is interrupted immediately, as soon as it occurs.

27. Method as claimed in claim 25 or 26, **characterised in that** the cooking time is at least double with respect to the one needed to cook the edible substances while maintaining the cooking liquid continuously boiling.
